# EUROPÄISCHE PATENTSCHRIFT

(11) **EP 3 539 700 B1**
(45) Veröffentlichungstag und Bekanntmachung des Hinweises auf die Patenterteilung: **26.10.2022**
(21) Anmeldenummer: 19160580.7
(22) Anmeldetag: 04.03.2019
(51) Int. Cl.: B23B 39/10, B25F 5/00, H02P 29/032, H02H 7/085

(54) **BOHRVORRICHTUNG UND VERFAHREN ZUM BETREIBEN EINER BOHRVORRICHTUNG**
DRILLING DEVICE AND METHOD FOR OPERATING A DRILLING DEVICE
DISPOSITIF DE PERÇAGE ET PROCÉDÉ POUR ACTIONNER UN DISPOSITIF DE PERÇAGE

(30) Priorität: 16.03.2018 DE 102018002148
(43) Veröffentlichungstag der Anmeldung: 18.09.2019
(73) Patentinhaber: C. & E. Fein GmbH, 73529 Schwäbisch Gmünd-Bargau (DE)
(72) Erfinder: Gosnik, Ralf, 73529 Schwäbisch Gmünd-Bargau (DE); Meyer, Christoph, 73529 Schwäbisch Gmünd-Bargau (DE); Scherrenbacher, Stefan, 73529 Schwäbisch Gmünd-Bargau (DE)
(74) Vertreter: Wallinger, Michael

(56) Entgegenhaltungen:
- WO-A2-2009/102082
- DE-A1- 4 119 941
- DE-B- 1 107 338
- DE-U1- 29 701 358
- GB-A- 2 283 378
- US-B2- 8 933 658

## Beschreibung

Die Erfindung betrifft eine Bohrvorrichtung, mit einem Motor zum Antreiben eines in einer Werkzeugaufnahme aufgenommen Werkzeugs, wobei der Motor mit einer elektrische Antriebsenergie bereitstellenden

Spannungsquelle gekoppelt ist, sowie mit einem ersten Schalter zum Einschalten des Motors. Außerdem betrifft die Erfindung ein Verfahren zum Betreiben einer erfindungsgemäßen Bohrvorrichtung.

Bei Bohrvorrichtungen und insbesondere bei Kernbohrmaschinen, die beim Bohren von Metall aber auch von Gestein verwendet werden, hat es sich als problematisch erwiesen, dass diese im Betrieb häufig sehr stark erhitzen.

Dies kann beispielsweise dann auftreten, wenn die verwendeten Werkzeuge abgenutzt oder gar beschädigt sind. Durch die Erhitzung der Bohrvorrichtung kann es zu einer Beschädigung der Bohrvorrichtung und in letzter Konsequenz sogar zu deren Ausfall kommen. Besonders betroffen ist hierbei insbesondere der Bereich des Motors. Für einen Nutzer der Bohrvorrichtung bedeutet dies im Falle einer Überhitzung, dass er die Bohrvorrichtung zunächst abkühlen lassen muss, bevor er mit seiner Arbeit fortfahren kann. Dies ist jedoch mit einem nicht unerheblichen Zeitaufwand verbunden, da es üblicherweise mindestens fünf bis zehn Minuten dauert, bis die Bohrvorrichtung soweit abgekühlt ist, dass eine Wiederaufnahme der Arbeit gefahrlos möglich ist.

Aus dem Stand der Technik - beispielsweise aus der DE 297 01 358 U1 - ist eine Bohrvorrichtung bekannt, bei der der Motor von dem Werkzeug durch ein Getriebe abgetrennt und in einem Leerlaufmodus betrieben wird, wenn die Motortemperatur einen Grenzwert übersteigt. Hierfür muss bei der DE 297 01 358 U1 jedoch ein äußerst komplexes Getriebe bereitgestellt werden, das die Abkopplung des Motors von dem Werkzeug ermöglicht. Nach der Abkoppelung ist es dann notwendig, zunächst einmal abzuwarten bis die Bohrvorrichtung hinreichend abgekühlt ist. Erst dann wird der Motor mehrere Minuten lang in dem Leerlaufmodus betrieben, um eine Abkühlung der Bohrvorrichtung zu erreichen. Für den Nutzer bedeutet dies eine sehr lange Wartedauer bis er die aus dem Stand der Technik bekannte Bohrvorrichtung wieder verwenden kann.

Die GB 2 283 378 A zeigt eine elektrische Vorrichtung, beispielsweise eine Bohrvorrichtung nach dem Oberbegriff des Anspruchs 1, die mit einer komplexen Schutzschaltung ausgestattet ist, um im Falle einer Überhitzung die Leistung der Vorrichtung zu reduzieren und gleichzeitig die auftretende Wärme abzuführen. Hierzu werden Dioden unterschiedlicher Polarität verwendet, die unterhalb kritischen Temperatur überbrückt sind. Überschreitet die Temperatur nun die kritische Temperatur, so werden zwar positive Halbzyklen ungehindert durchgelassen, negative Halbzyklen aber werden durch einen Widerstand abgeschwächt. Hierdurch wird die Vorrichtung automatisch mit einer reduzierten Leistung betrieben, wenn eine thermische Überlastsituation erkannt wird.

Bei der DE 1 107 338 B wird vorgeschlagen, mehrere Thermowächter zu verwenden, die bei unterschiedlichen Ansprechtemperaturen auslösen, um Temperaturanstiege innerhalb verschiedener Bereiche eines Asynchronmotors zu detektieren und hierdurch einen Anlaufschutz für den Motor bereitzustellen, wenn dieser beim Einschalten blockieren sollte. Dem Thermowächter, der bei einer niedrigeren Ansprechtemperatur auslöst, wird dabei noch eine Hilfsschaltung zugeordnet, mit der sichergestellt wird, dass dieser Thermowächter bei einem normalen Temperaturverlauf - also bei nicht blockiertem Motor - deaktiviert ist.

Aus der DE 41 19 941 A1 ist eine Kernbohrmaschine bekannt, die eine Schutzschaltung aufweist, mit der thermische Überbelastungen der Kernbohrmaschine vermindert werden sollen, indem nach dem Auslösen der Schutzschaltung bei Überschreiten einer Grenztemperatur der Motor ausgeschaltet wird. Ein erneutes Einschalten des Motors ist hierbei erst dann möglich, wenn die Temperatur der Motorwicklungen wieder unter einen Grenzwert abgesunken ist.

Bei der WO 2009/102 082 A2 wird das Abschaltverhalten einer Bohrmaschine in Abhängigkeit von der Stromaufnahme verändert, um einen Temperaturanstieg über einen kritischen Wert hinaus zu verhindern.

Aus der US 8,933,658 B2 ist hingegen bekannt, ein Ausschalten des elektrischen Antriebs dadurch zu verhindern, dass die Leistung des Antriebs rechtzeitig reduziert wird, wenn ein Temperaturgrenzwert erreicht wird.

Der Erfindung liegt daher die Aufgabe zugrunde, die oben genannten Nachteile zu reduzieren und eine verbesserte Bohrvorrichtung bereitzustellen, die eine schnellere Abkühlung der Bohrvorrichtung ermöglicht. Weiterhin ist es Aufgabe der vorliegenden Erfindung, ein verbessertes Betriebsverfahren bereitzustellen.

Die die Bohrvorrichtung betreffende Aufgabe wird gemäß der Erfindung bei einer Bohrvorrichtung nach Anspruch 1 gelöst. Ein Temperaturschaltelement ist vorgesehen, das bei einer Überschreitung einer Grenztemperatur des eingeschalteten Motors reversibel aus einer ersten Schaltstellung in eine den Motor abschaltende zweite Schaltstellung überführt wird, und zur Kühlung des Motors sind der erste Schalter und das Temperaturschaltelement derartig geschaltet, dass in der zweiten Schaltstellung des Temperaturschaltelements ein Einschalten des Motors durch Betätigen und Halten des ersten Schalters in Form eines "hold-to-run"-Modus ermöglicht ist.

Hierdurch wird gewährleistet, dass der Motor der Bohrvorrichtung bei Überschreiten einer Grenztemperatur zunächst automatisch abgeschaltet wird. Durch das Temperaturschaltelement kann somit eine Beschädigung der Bohrvorrichtung effektiv verhindert werden. Insbesondere bei Kernbohrmaschinen, bei denen ein eine Führung aufweisender Bohrständer beispielsweise mittels eines Magneten an dem Werkstück befestigt wird, kann der Nutzer dann die Bohrvorrichtung zunächst leicht in dem Bohrloch geführt zurückfahren beziehungsweise zurückziehen. Betätigt und hält der Nutzer nun den ersten Schalter, so wird der Motor trotz des in der zweiten Schaltstellung befindlichen Temperaturschaltelements wieder eingeschaltet und zwar solange der erste Schalter gedrückt bleibt - also in Form eines "hold-to-run"-Modus. Hierdurch wird der Motor und ein damit verbundener Lüfter angetrieben und die in dem Motor gespeicherte Wärme kann durch den sich drehenden Motor beziehungsweise durch dessen Lüfter effektiv abgeführt werden, wodurch insbesondere Hitzestaus innerhalb des Motors verhindert werden. Hierdurch ist es für den Nutzer möglich, die Bohrvorrichtung innerhalb eines vergleichsweise kurzen Zeitraums von weniger als einer Minute wieder zu verwenden.

Die Herstellungskosten lassen sich zudem insbesondere dadurch absenken, wenn das Temperaturschaltelement als ein Temperaturschalter ausgelegt ist. Hierdurch kann auf eine aufwändige Elektronik verzichtet werden, die eine permanente Überwachung der Motortemperatur erforderlich machen würde. Gleichwohl ist es im Rahmen der Erfindung aber explizit auch vorgesehen, dass die Temperatur des Motors erfasst und an eine Steuerelektronik übergeben wird, die dann die Abschaltung des Motors bei Erreichen der Grenztemperatur bewirkt.

In diesem Zusammenhang hat es sich auch als besonders günstig erwiesen, wenn der Temperaturschalter mit einem dem Motor vorgeschalteten Relais elektrisch leitend verbunden ist. Wird der erste Schalter betätigt, so führt dies dazu, dass der Motor eingeschaltet wird solange sich der Temperaturschalter in der ersten Schaltstellung befindet. Übersteigt die Temperatur des Motors die Grenztemperatur, so führt die dadurch induzierte Verstellung des Temperaturschalters aus der ersten Schaltstellung in die zweite Schaltstellung dazu, dass die Spannung an dem damit verbundenen Relais abfällt, wodurch der Motor automatisch abgeschaltet wird. Gleichwohl ist in diesem Zustand für den Nutzer durch Drücken und Halten des ersten Schalters die Möglichkeit gegeben, den Motor wieder einzuschalten, um diesen zu kühlen.

Als vorteilhaft hat es sich auch gezeigt, wenn der Temperaturschalter als ein Bimetallschalter ausgebildet ist. Die Verwendung eines Bimetallschalters wirkt sich dabei positiv auf die Zuverlässigkeit der erfindungsgemäßen Bohrvorrichtung aus, da derartige Schalter sehr unempfindlich gegenüber Vibrationen und Erschütterungen sind. Letztlich hat die Verwendung eines Bimetallschalters auch den Vorteil, dass dieser kostengünstig ist.

Bewährt hat es sich zudem auch, wenn die Schalttemperatur des Temperaturschalters für dessen Verstellung aus der zweiten Schaltstellung in die erste Schaltstellung kleiner ist als die Abschalttemperatur für dessen Verstellung aus der ersten Schaltstellung in die zweite Schaltstellung. Da die Schalttemperatur somit kleiner ist als die Abschalttemperatur, die der Grenztemperatur entspricht und bei der der eingeschaltete Motor automatisch abgeschaltet wird, wird gewährleistet, dass ein Einschalten des Motors durch ein einfaches Drücken und Loslassen des ersten Schalters erst dann möglich ist, wenn die Temperatur des Motors ausreichend abgesenkt wurde und unter der Schalttemperatur liegt. Ist die Temperatur des Motors hingegen noch nicht unter die Schalttemperatur abgesunken, so führt ein Loslassen des ersten Schalters automatisch wieder zu einem sofortigen Abschalten des Motors.

Um einem Missbrauch durch den Nutzer vorzubeugen, hat es sich zudem bewährt, wenn ein Strombegrenzer und/oder ein Drehmomentbegrenzer vorgesehen ist, mit dem bei Überschreitung eines vorgebbaren Motorstroms und/oder eines vorgebbaren Drehmoments ein Einschalten des Motors durch Betätigung und Halten des ersten Schalters bei in der zweiten Schaltstellung befindlichem Temperaturschaltelement unterbunden ist. Hierdurch wird auf einfache Art und Weise sichergestellt, dass eine Umgehung der Motorabschaltung oberhalb der Grenztemperatur unterbunden wird, was anderenfalls zu einer irreparablen Schädigung des Motors beziehungsweise der ganzen Maschine führen würde. Der Nutzer ist somit also nicht in der Lage, die Bohrvorrichtung weiter zum Bohren zu verwenden, wenn die Temperatur des Motors oberhalb der Grenztemperatur liegt, da in diesem Falle der Strom und/oder das Drehmoment des laufenden Motors beim Bohren über einen gewissen Grenzwert ansteigen würde. Wird dies erkannt, so wird die Funktion des ersten Schalters deaktiviert und die Betätigung des ersten Schalters führt dann nicht länger zum Einschalten der Bohrvorrichtung.

Als vorteilhaft hat es sich auch erwiesen, wenn ein Signalgeber vorgesehen ist, der bei der Verstellung des Temperaturschalters zwischen der ersten Schaltstellung und der zweiten Schaltstellung aktiviert oder deaktiviert wird. Hierdurch ist es also für den Nutzer möglich, unmittelbar festzustellen ob die Temperatur des Motors die Grenztemperatur bereits überschritten hat und/oder noch unterhalb dieses Wertes liegt. Beispielsweise kann der Signalgeber unterhalb der Grenztemperatur aktiviert und oberhalb der Grenztemperatur deaktiviert sein. Alternativ oder ergänzend ist es auch vorgesehen, den Signalgeber erst dann zu aktivieren, wenn die Temperatur des Motors die Grenztemperatur erreicht hat. In diesem Zusammenhang hat es sich besonders bewährt, wenn der Signalgeber ausgewählt ist aus einer Gruppe, die optische und akustische Signalgeber umfasst. Hier haben sich insbesondere die optischen Signalgeber bewährt, die beispielsweise als LED gebildet sein können. Diese sind auch dann einfach zu erkennen, wenn die Geräuschkulisse der Umgebung hoch ist, wie dies auf Baustellen häufig vorkommt.

Um die Temperatur des Motors möglichst motornah messen zu können, hat es sich zudem als günstig erwiesen, wenn der Temperaturschalter den Polwicklungen des Motors zugeordnet ist. Hierbei hat es sich auch als vorteilhaft gezeigt, wenn der Temperaturschalter an die Polwicklungen geklebt ist, wobei auch andere Befestigungsmöglichkeiten im Rahmen der Erfindung vorgesehen sind. So kann beispielsweise der Temperaturschalter unmittelbar in die Polwicklungen gewickelt werden.

Als vorteilhaft hat es sich auch gezeigt, wenn ein Laufrichtungsschalter vorgesehen ist zur Änderung der Drehrichtung des Motors. Hierdurch kann der Nutzer der Bohrvorrichtung die Drehrichtung des Motors - beispielsweise aus einem Rechtslauf in einen Linkslauf - verändern und dann durch Betätigen und Halten des ersten Schalters die Bohrvorrichtung abkühlen. Die Verstellung der Laufrichtung kann dabei auch automatisch erfolgen, wenn das Temperaturschaltelement zwischen der ersten und der zweiten Schaltstellung verstellt wird.

Für die Betriebssicherheit der erfindungsgemäßen Bohrvorrichtung hat es sich als günstig gezeigt, wenn die Grenztemperatur zwischen 140 °C und 180 °C und bevorzugt bei 160 °C liegt. Bei diesen Temperaturen ist sichergestellt, dass die Bohrvorrichtung und insbesondere der Motor nicht übermäßig thermischen Belastungen ausgesetzt ist, was anderenfalls zu irreparablen Schäden des Motors und/oder der Bohrvorrichtung führen könnte.

Die das Betriebsverfahren betreffende Aufgabe wird gemäß der Erfindung durch ein Verfahren nach Anspruch 12 gelöst, dass die Schritte umfasst:
- Betätigen eines ersten Schalters zum Einschalten eines Motors zum Antreiben eines in einer Werkzeugaufnahme aufgenommenen Werkzeugs,
- Verstellen eines Temperaturschaltelements bei Überschreiten einer Grenztemperatur des Motors aus einer ersten Schaltstellung in eine den Motor abschaltende zweite Schaltstellung und simultanes Ausschalten des Motors,
- Betätigen und Halten des ersten Schalters zum Einschalten des Motors, und
- Abkühlen des Motors.

Mit dem erfindungsgemäßen Verfahren ist sichergestellt, dass ein Abkühlen des Motors auf einfache Weise realisiert werden kann, indem nach dem Verstellen des Temperaturschalters aus der ersten in die zweite Schaltstellung und dem dadurch ausgelösten simultanen Abschalten des Motors dieser durch das Betätigen und Halten des ersten Schalters in einem "hold-to-run"-Modus betrieben und dadurch abgekühlt wird. Mit anderen Worten kann also gesagt werden, dass der überhitzte Motor durch den Motor selbst gekühlt wird.

Im Folgenden wird die Erfindung an einem in den Zeichnungen dargestellten Ausführungsbeispiel näher erläutert; es zeigen:
- Fig. 1: eine teilgeschnittene Seitenansicht einer erfindungsgemäßen Bohrvorrichtung, und
- Fig. 2: ein vereinfachtes Blockschaltbild einer erfindungsgemäßen Bohrvorrichtung.

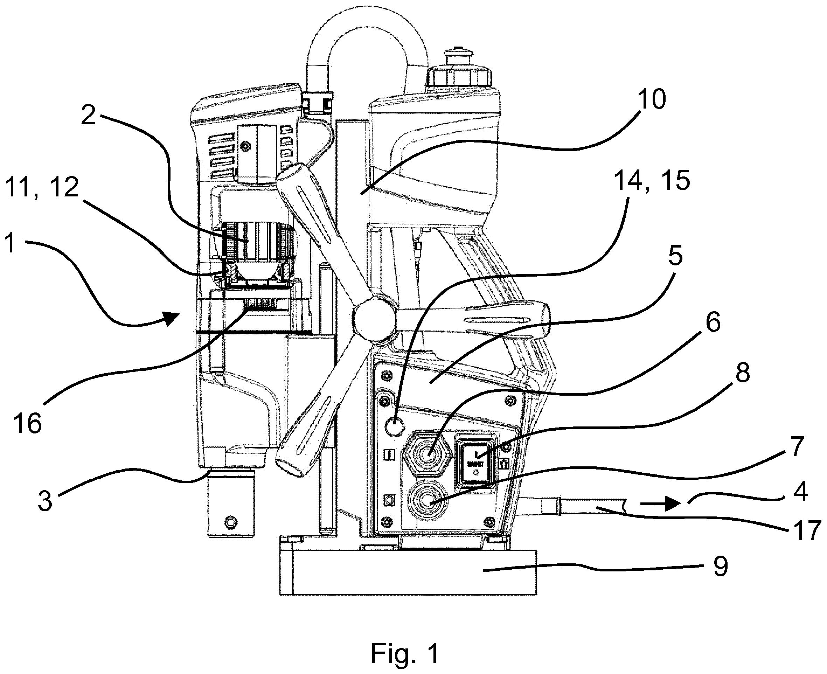

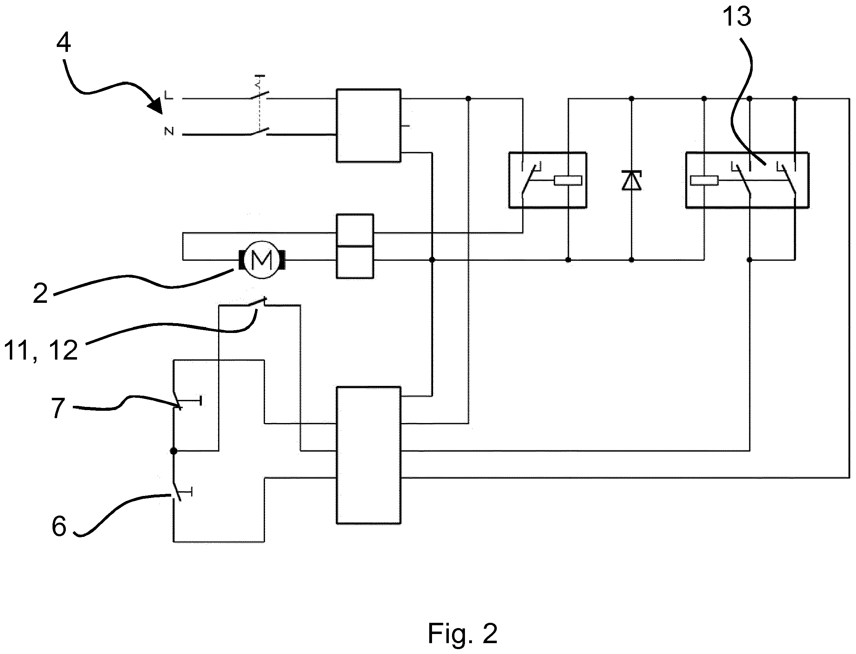

Figur 1 zeigt in einer teilgeschnittenen Seitenansicht eine Bohrvorrichtung 1, mit einem Motor 2 zum Antreiben eines in einer Werkzeugaufnahme 3 aufgenommenen Werkzeugs. Die Bohrvorrichtung 1 und damit insbesondere der Motor 2 ist dabei über ein Versorgungskabel 17 mit einer elektrische Antriebsenergie bereitstellenden Spannungsquelle 4 gekoppelt, die in der Figur 1 lediglich als Pfeil angedeutet ist. Im Rahmen der Erfindung ist es jedoch auch möglich, die Spannungsversorgung durch einen Akku bereitzustellen. An einem Gehäuse 5 sind ein erster Schalter 6 zum Einschalten des Motors 2 und ein zweiter Schalter 7 zum Ausschalten des Motors 2 angeordnet. Mit einem Magnetschalter 8 kann ein Magnetfuß 9 des Bohrständer 10 eingeschaltet werden, um die Bohrvorrichtung 1 an einem magnetisierbaren Untergrund zu befestigen. Um ein Überhitzen des Motors 2 zu verhindern, ist an den Polwicklungen des Motor 2 ein Temperaturschalter 11 durch Kleben befestigt, der als Temperaturschaltelement 12 dient. Überschreitet die Temperatur des eingeschalteten Motors 2 eine Grenztemperatur, so wird der Temperaturschalter 11 reversibel aus einer ersten Schaltstellung in eine den Motor 2 abschaltende zweite Schaltstellung überführt. Zur Kühlung des überhitzen Motors 2 kann der erste Schalter 6 betätigt und gehalten werden, wodurch der Motor 2 eingeschaltet und durch die Bewegung des Motors 2 und eines damit verbundenen Lüfter 16 gekühlt wird. Bei der in der Zeichnung dargestellten Bohrvorrichtung 1, bei der es sich um eine Kernbohrmaschine handelt, ist der Temperaturschalter 11 mit einem dem Motor 2 vorgeschalteten Relais 13 elektrisch leitend verbunden, wie insbesondere mit Bezug zu Figur 2 noch näher erläutert wird. Weiterhin ist aus der Figur 1 ein Signalgeber 14 erkennbar, der in dem gezeigten Ausführungsbeispiel als optischer Signalgeber in Form einer LED 15 gebildet ist. Bei der Verstellung des Temperaturschaltelements 12 zwischen der ersten Schaltstellung und der zweiten Schaltstellung wird diese LED aktiviert, also dann wenn die Temperatur des Motors 2 die Grenztemperatur übersteigt. Diese liegt in dem gezeigten Ausführungsbeispiel bei 160 °C.

Figur 2 zeigt einen reduzierten Schaltplan der erfindungsgemäßen Bohrvorrichtung 1. Aus diesem geht hervor, dass der Temperaturschalter 11 über das Relais 13 mit dem Motor 2 gekoppelt ist. Übersteigt die Temperatur des Motors 2 die Grenztemperatur so wird der Temperaturschalter 11 geöffnet, wodurch an dem Relais 13 ein Spannungsabfall eintritt, der dazu führt, dass die Spannungsversorgung des Motors 2 unterbrochen wird. Für den Nutzer ist es danach jedoch möglich, durch betätigen und halten des ersten Schalters 6 den Motor 2 in einem "hold-to-run"-Modus zu starten, letztlich also den geöffneten Temperaturschalter 11 zu überbrücken. Lässt der Nutzer den ersten Schalter 6 dann wieder los, so führt dies dazu, dass der Motor 2 wieder ausgeschaltet wird, wenn dieser eine Temperatur aufweist, die oberhalb einer Schalttemperatur des Temperaturschalters 11 liegt. Diese Schalttemperatur ist dabei geringer als eine der Grenztemperatur entsprechende Abschalttemperatur. Ist hingegen die Temperatur des Motors 2 durch das Drücken des ersten Schalters 6 unterhalb der Schalttemperatur abgesunken, was dem Nutzer durch das Erlöschen der LED 15 signalisiert wird, so führt ein Loslassen des ersten Schalters 6 dazu, dass der Motor 2 läuft. Der Temperaturschalter 11 befindet sich dann wieder in der ersten Schaltstellung - also im geschlossenem Zustand, wodurch das Relais 13 schaltet und die Spannungsversorgung des Motors 2 über die Spannungsquelle 4 gewährleistet ist.

Im Folgenden wird das erfindungsgemäße Verfahren noch einmal beschrieben. Der Nutzer der erfindungsgemäßen Bohrvorrichtung 1 betätigt zunächst den ersten Schalter 6 zum Einschalten des Motors 2, wodurch sich das in der Werkzeugaufnahme 3 der Bohrvorrichtung 1 aufgenommene Werkzeug zu drehen beginnt. Überschreitet im Bohrbetrieb die Temperatur des Motor 2 die Grenztemperatur, so führt dies dazu, dass das Temperaturschaltelement 12, das in dem gezeigten Ausführungsbeispiel als Temperaturschalter 11 ausgebildet ist, aus einer ersten Schaltstellung in eine zweite Schaltstellung überführt wird, in der der Motor 2 abgeschaltet wird. Für den Nutzer ist es nun jedoch möglich, in einem "hold-to-run"-Modus durch Betätigen und Halten des ersten Schalters 6 den Motor 2 einzuschalten. Hierbei wird durch den darin befindlichen Lüfter 16 dann die in dem Motor 2 befindliche Wärme abgeführt. Ist die Temperatur des Motors 2 durch den Betrieb der Bohrvorrichtung 1 in dem "hold-to-run"-Modus unterhalb einer Schalttemperatur abgesenkt worden, so wird der Temperaturschalter 11 aus der zweiten Schaltstellung in die erste Schaltstellung überführt, so dass ein Loslassen des ersten Schalters 6 dazu führt, dass die Bohrvorrichtung 1 eingeschaltet bleibt. Ist hingegen die Temperatur des Motors 2 noch nicht unter die Schalttemperatur abgesunken, so führt das Loslassen des zweiten Schalters 6 dazu, dass der Motor 2 wieder abgeschaltet wird, da sich dann der Temperaturschalter 11 noch in der zweiten Schaltstellung befindet.

### Bezugszeichenliste

- 1: Bohrvorrichtung
- 2: Motor
- 3: Werkzeugaufnahme
- 4: Spannungsquelle
- 5: Gehäuse
- 6: erster Schalter
- 7: zweiter Schalter
- 8: Magnetschalter
- 9: Magnetfuß
- 10: Bohrständer
- 11: Temperaturschalter
- 12: Temperaturschaltelement
- 13: Relais
- 14: Signalgeber
- 15: LED
- 16: Lüfter
- 17: Versorgungskabel

## Patentansprüche

1. Bohrvorrichtung (1), mit einem Motor (2) zum Antreiben eines in einer Werkzeugaufnahme (3) aufgenommenen Werkzeugs, wobei der Motor (2) mit einer elektrische Antriebsenergie bereitstellenden Spannungsquelle (4) gekoppelt ist, sowie mit einem ersten Schalter (6) zum Einschalten des Motors (2), **dadurch gekennzeichnet, dass** ein Temperaturschaltelement (12) vorgesehen ist, das bei einer Überschreitung einer Grenztemperatur des eingeschalteten Motors (2) reversibel aus einer ersten Schaltstellung in eine den Motor (2) abschaltende zweite Schaltstellung überführt wird, und dass zur Kühlung des Motors (2) der erste Schalter (6) und das Temperaturschaltelement (12) derartig geschaltet sind, dass in der zweiten Schaltstellung des Temperaturschaltelements (12) ein Einschalten des Motors (2) durch Betätigen und Halten des ersten Schalters (6) in Form eines "hold-to-run"-Modus ermöglicht ist.

2. Bohrvorrichtung (1) nach Anspruch 1, **dadurch gekennzeichnet, dass** das Temperaturschaltelement (12) als ein Temperaturschalter (11) ausgebildet ist.

3. Bohrvorrichtung (1) nach Anspruch 2, **dadurch gekennzeichnet, dass** der Temperaturschalter (11) mit einem dem Motor (2) vorgeschalteten Relais (13) elektrisch leitend verbunden ist.

4. Bohrvorrichtung (1) nach Anspruch 2 oder 3, **dadurch gekennzeichnet, dass** der Temperaturschalter (11) als ein Bimetallschalter ausgebildet ist.

5. Bohrvorrichtung (1) nach einem der Ansprüche 2 bis 4, **dadurch gekennzeichnet, dass** die Schalttemperatur des Temperaturschalters (11) für dessen Verstellung aus der zweiten Schaltstellung in die erste Schaltstellung kleiner ist als die Abschalttemperatur für dessen Verstellung aus der ersten Schaltstellung in die zweite Schaltstellung.

6. Bohrvorrichtung (1) nach einem der Ansprüche 1 bis 5, **dadurch gekennzeichnet, dass** ein Strombegrenzer und/oder ein Drehmomentbegrenzer vorgesehen ist, mit dem bei einer Überschreitung eines vorgebbaren Motorstroms und/oder eines vorgebbaren Drehmoments ein Einschalten des Motors (2) durch Betätigung des ersten Schalters (6) bei in der zweiten Schaltstellung befindlichem Temperaturschaltelement (12) unterbunden ist.

7. Bohrvorrichtung (1) nach einem der Ansprüche 1 bis 6, **dadurch gekennzeichnet, dass** ein Signalgeber (14) vorgesehen ist, der bei der Verstellung des Temperaturschaltelements (12) zwischen der ersten Schaltstellung und der zweiten Schaltstellung aktiviert und/oder deaktiviert wird.

8. Bohrvorrichtung (1) nach Anspruch 7, **dadurch gekennzeichnet, dass** der Signalgeber (14) ausgewählt ist aus einer Gruppe, die optische und akustische Signalgeber umfasst.

9. Bohrvorrichtung (1) nach einem der Ansprüche 2 bis 8, **dadurch gekennzeichnet, dass** der Temperaturschalter (11) den Polwicklungen des Motors (2) zugeordnet ist.

10. Bohrvorrichtung (1) nach einem der Ansprüche 1 bis 9, **dadurch gekennzeichnet, dass** ein Laufrichtungsschalter vorgesehen ist zur Änderung der Drehrichtung des Motors (2)..

11. Bohrvorrichtung (1) nach einem der Ansprüche 1 bis 10, **dadurch gekennzeichnet, dass** die Grenztemperatur zwischen 140 °C und 180 °C und bevorzugt bei 160 °C liegt.

12. Verfahren zum Betreiben einer Bohrvorrichtung nach einem der Ansprüche 1 bis 11, umfassend die Schritte:
- Betätigen eines ersten Schalters (6) zum Einschalten eines Motors (2) zum Antreiben eines in einer Werkzeugaufnahme (3) der Bohrvorrichtung (1) aufgenommenen Werkzeugs,
- Verstellen eines Temperaturschaltelements (12) bei Überschreiten einer Grenztemperatur des Motors (2) aus einer ersten Schaltstellung in eine den Motor (2) abschaltende zweite Schaltstellung und simultanes Ausschalten der Motors (2),
- Betätigen und Halten des ersten Schalters (6) zum Einschalten des Motors (2), und
- Abkühlen des Motors (2).

## Claims

1. Drilling device (1), comprising a motor (2) for driving a tool accommodated in a tool holder (3), wherein the motor (2) is coupled to a voltage source (4) providing electrical drive energy, and comprising a first switch (6) for switching on the motor (2), **characterized in that** a temperature switching element (12) is provided, which, when a limit temperature of the switched-on motor (2) is exceeded, is reversibly transferred from a first switching position into a second switching position which switches off the motor (2), and **in that**, for cooling the motor (2), the first switch (6) and the temperature switching element (12) are switched in such a way that, in the second switching position of the temperature switching element (12), switching on the motor (2) is facilitated by actuating and holding the first switch (6) in form of a "hold-to-run"-mode.

2. Drilling device (1) according to claim 1, **characterized in that** the temperature switching element (12) is configured as a temperature switch (11).

3. Drilling device (1) according to claim 2, **characterized in that** the temperature switch (11) is electrically conductively connected to a relay (13) connected upstream of the motor (2).

4. Drilling device (1) according to claim 2 or 3, **characterized in that** the temperature switch (11) is configured as a bimetal switch.

5. Drilling device (1) according to one of claims 2 to 4, **characterized in that** the switching temperature of the temperature switch (11) for its displacement from the second switching position into the first switching position is lower than the switch-off temperature for its displacement from the first switching position into the second switching position.

6. Drilling device (1) according to one of claims 1 to 5, **characterized in that** a current limiter and/or a torque limiter is provided, by means of which, if a predeterminable motor current and/or a predeterminable torque is exceeded, switching on of the motor (2) by actuation of the first switch (6) is prevented when the temperature switching element (12) is in the second switching position.

7. Drilling device (1) according to one of claims 1 to 6, **characterized in that** a signal transmitter (14) is provided, which is activated and/or deactivated when the temperature switching element (12) is moved between the first switching position and the second switching position.

8. Drilling device (1) according to claim 7, **characterized in that** the signal transmitter (14) is selected from a group comprising optical and acoustic signal transmitters.

9. Drilling device (1) according to any one of claims 2 to 8, **characterized in that** the temperature switch (11) is associated with the pole windings of the motor (2).

10. Drilling device (1) according to any one of claims 1 to 9, **characterized in that** a running direction switch is provided for changing the direction of rotation of the motor (2).

11. Drilling device (1) according to one of claims 1 to 10, **characterized in that** the limit temperature is between 140 °C and 180 °C and preferably at 160 °C.

12. Method for operating a drilling device according to any one of claims 1 to 11, comprising the steps:
- actuating a first switch (6) for switching on a motor (2) for driving a tool accommodated in a tool holder (3) of the drilling device (1),
- moving a temperature switching element (12) when a limit temperature of the motor (2) is exceeded from a first switching position to a second switching position which switches off the motor (2), and simultaneously switching off the motor (2),
- actuating and holding the first switch (6) to switch on the motor (2), and
- cooling down the motor (2).

## Revendications

1. Dispositif de perçage (1), avec un moteur (2) pour entraîner un outil logé dans un logement d'outil (3), dans lequel le moteur (2) est couplé à une source de tension (4) fournissant de l'énergie d'entraînement électrique, ainsi qu'avec un premier commutateur (6) pour activer le moteur (2), **caractérisé en ce qu'**est prévu un élément de commutation de température (12), qui est transféré, dans le cas d'un dépassement d'une température limite du moteur (2) mis en marche, de manière réversible depuis une première position de commutation dans une deuxième position de commutation coupant le moteur (2), et que pour refroidir le moteur (2), le premier commutateur (6) et l'élément de commutation de température (12) sont commutés de telle manière que dans la deuxième position de commutation de l'élément de commutation de température (12), une mise en marche du moteur (2) est rendue possible par l'actionnement et le maintien du premier commutateur (6) sous la forme d'un mode « hold-to-run ».

2. Dispositif de perçage (1) selon la revendication 1, **caractérisé en ce que** l'élément de commutation de température (12) est réalisé en tant qu'un commutateur de température (11).

3. Dispositif de perçage (1) selon la revendication 2, **caractérisé en ce que** le commutateur de température (11) est relié de manière électriquement conductrice à un relais (13) branché en amont du moteur (2).

4. Dispositif de perçage (1) selon la revendication 2 ou 3, **caractérisé en ce que** le commutateur de température (11) est réalisé en tant qu'un commutateur bimétallique.

5. Dispositif de perçage (1) selon l'une quelconque des revendications 2 à 4, **caractérisé en ce que** la température de commutation du commutateur de température (11) pour son ajustement depuis la deuxième position de commutation dans la première position de commutation est inférieure à la température de coupure pour son ajustement depuis la première position de commutation dans la deuxième position de commutation.

6. Dispositif de perçage (1) selon l'une quelconque des revendications 1 à 5, **caractérisé en ce que** sont prévus un limiteur de courant et/ou un limiteur de couple de rotation, avec lesquels, lors d'un dépassement d'un courant de moteur pouvant être spécifié et/ou d'un couple de rotation pouvant être spécifié, une mise en marche du moteur (2) est empêchée en actionnant le premier commutateur (6) lorsque l'élément de commutation de température (12) se trouve dans la deuxième position de commutation.

7. Dispositif de perçage (1) selon l'une quelconque des revendications 1 à 6, **caractérisé en ce qu'**est prévu un capteur de signaux (14), qui est activé et/ou est désactivé lors de l'ajustement de l'élément de commutation de température (12) entre la première position de commutation et la deuxième position de commutation.

8. Dispositif de perçage (1) selon la revendication 7, **caractérisé en ce que** le capteur de signaux (14) est choisi parmi un groupe qui comprend des capteurs de signaux optiques et acoustiques.

9. Dispositif de perçage (1) selon l'une quelconque des revendications 2 à 8, **caractérisé en ce que** le commutateur de température (11) est associé à des enroulements polaires du moteur (2).

10. Dispositif (1) selon l'une quelconque des revendications 1 à 9, **caractérisé en ce qu'**est prévu un commutateur de déplacement pour modifier le sens de rotation du moteur (2).

11. Dispositif de perçage (1) selon l'une quelconque des revendications 1 à 10, **caractérisé en ce que** la température limite se situe entre 140 °C et 180 °C et de manière préférée est de l'ordre de 160 °C.

12. Procédé pour faire fonctionner un dispositif de perçage selon l'une quelconque des revendications 1 à 11, comprenant les étapes :
- d'actionnement du premier commutateur (6) pour mettre en marche un moteur (2) pour entraîner un outil logé dans un logement d'outil (3) du dispositif de perçage (1),
- d'ajustement d'un élément de commutation de température (12) lors du dépassement d'une température limite du moteur (2) depuis une première position de commutation dans une deuxième position de commutation coupant le moteur (2) et d'arrêt simultané du moteur (2),
- d'actionnement et de maintien du premier commutateur (6) pour mettre en marche le moteur (2), et
- de refroidissement du moteur (2).
